# EUROPEAN PATENT APPLICATION

(11) **EP 4 391 138 A1**
(43) Date of publication of application: **26.06.2024**
(21) Application number: 23194673.2
(22) Date of filing: 31.08.2023
(51) Int. Cl.: H01M 10/0567, H01M 10/0525, H01M 4/587, H01M 4/525, H01M 4/38, H01M 4/36, H01M 4/134, H01M 4/133, H01M 4/02

(54) **RECHARGEABLE LITHIUM BATTERIES**

(30) Priority: 19.12.2022 KR 20220178452
(71) Applicant: Samsung SDI Co., Ltd., Yongin-si, Gyeonggi-do 17084 (KR)
(72) Inventor: KIM, Sanghyung, 17084 Yongin-si (KR); BAE, Tae Hyon, 17084 Yongin-si (KR); LEE, Harim, 17084 Yongin-si (KR); SON, Seunghyeon, 17084 Yongin-si (KR); KIM, Yunhee, 17084 Yongin-si (KR); YU, Arum, 17084 Yongin-si (KR)
(74) Representative: Russell, Tim

(57) **Abstract**

Disclosed is a rechargeable lithium battery comprising a positive electrode comprising a positive electrode active material comprising lithium cobalt-based oxide, a negative electrode comprising a carbon-based negative electrode active material and a silicon-based negative electrode active material, a separator between the positive electrode and the negative electrode, and an electrolyte solution, wherein the silicon-based negative electrode active material is included in an amount of about 0.1 wt% to about 10 wt% based on the total amount of the carbon-based negative electrode active material and the silicon-based negative electrode active material, and the electrolyte solution comprises a non-aqueous organic solvent, a lithium salt, and an additive, and the additive comprises a first compound that is a compound represented by Chemical Formula 1, CsPF₆, or a combination thereof.

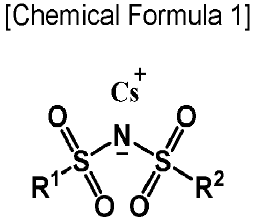

In Chemical Formula 1, R¹ and R² are each independently a fluoro group, or a C1 to C4 fluoroalkyl group substituted with at least one fluoro group.

## Description

### BACKGROUND OF THE INVENTION

### (a) Field of the Invention

Rechargeable lithium batteries are disclosed.

### (b) Description of the Related Art

A rechargeable lithium battery is widely used as a driving power source for mobile information terminals such as smart phones and laptops because it is easy to carry while implementing high energy density. Recently, a rechargeable lithium battery secured with high capacity, high energy density, and high safety has been actively studied for use as a power source for driving a hybrid vehicle or an electric vehicle, or a power source for power storage.

In a rechargeable lithium battery, an electrolyte solution plays an important role in delivering lithium ions, and among them, an electrolyte solution comprising an organic solvent and a lithium salt is most commonly used because it can exhibit extremely high ionic conductivity. The electrolyte solution plays an important role in determining safety and performance of the rechargeable lithium battery.

Recently, as high-capacity, high-energy density batteries are required, batteries need to be designed to be driven at a high voltage of 4.5 V or more as well as increase high density of electrodes. However, under severe conditions such as a high voltage or high-speed charging, since a positive electrode is deteriorated, and lithium dendrites grow on surface of a negative electrode, which accelerate a side reaction between the electrodes and the electrolyte solution, there is a battery safety problem due to a decrease in a battery cycle-life, gas generation, and the like.

In order to solve this problem, methods of protecting the electrodes through a surface treatment to suppress the side reaction of the electrodes with the electrolyte solution have been suggested. However, the methods have been reported to have problems that the surface treatment of the positive electrode exhibits no sufficient protection effect under high voltage driving conditions, while the surface treatment of the negative electrode deteriorates capacity. Accordingly, while a high-capacity electrode drivable at a high voltage is designed, development of an electrolyte solution capable of simultaneously improving the battery safety and performance is required.

### SUMMARY OF THE INVENTION

An embodiment provides a rechargeable lithium battery having simultaneously improved high capacity, high voltage, and cycle-life characteristics by designing an electrode capable of securing high capacity, a high voltage, and high-speed charging and applying an electrolyte solution having excellent oxidation resistance stability and forming a stable film in a high voltage environment thereto, decreasing initial resistance and a resistance increase rate at the high-temperature storage and thus effectively suppressing cycle-life degradation under a high voltage or rapid-charging condition.

In an embodiment, a rechargeable lithium battery comprises a positive electrode comprising a positive electrode active material comprising lithium cobalt-based oxide, a negative electrode comprising a carbon-based negative electrode active material and a silicon-based negative electrode active material, a separator between the positive electrode and the negative electrode, and an electrolyte solution, the silicon-based negative electrode active material is included in an amount of about 0.1 wt% to about 10 wt% based on the total amount of the carbon-based negative electrode active material and the silicon-based negative electrode active material, and the electrolyte solution comprises a non-aqueous organic solvent, a lithium salt, and an additive, and the additive comprises a first compound that is a compound represented by Chemical Formula 1, CsPF₆, or a combination thereof.

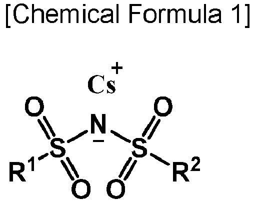

In Chemical Formula 1, R¹ and R² are each independently a fluoro group, or a C1 to C4 fluoroalkyl group substituted with at least one fluoro group.

The rechargeable lithium battery according to an embodiment suppresses a problem of elution of metal ions in the electrolyte solution while implementing high-capacity and high-voltage characteristics, effectively improves a resistance problem by reducing the initial resistance and a resistance increase rate during high-temperature storage, and improves cycle-life characteristics.

### BRIEF DESCRIPTION OF THE DRAWINGS

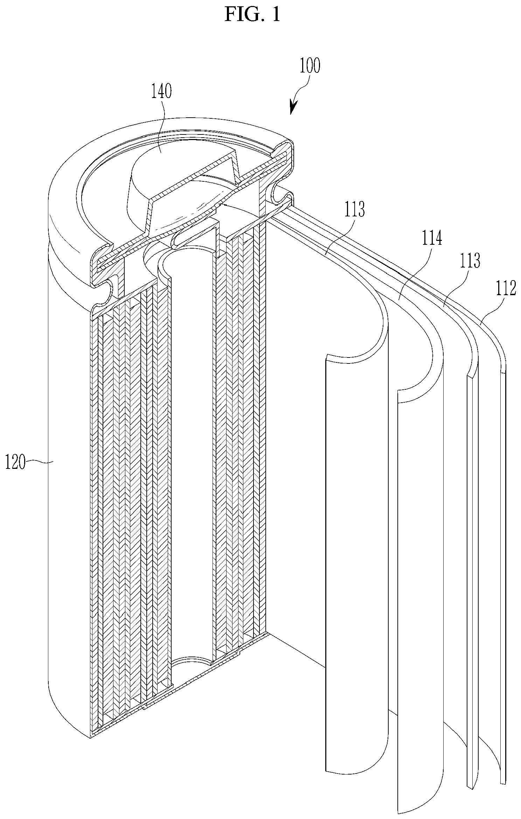

FIG. 1 is a schematic view illustrating a rechargeable lithium battery according to an embodiment.

### DETAILED DESCRIPTION OF THE EMBODIMENTS

Hereinafter, specific embodiments will be described in detail so that those of ordinary skill in the art can easily implement them. However, this disclosure may be embodied in many different forms and is not construed as limited to the example embodiments set forth herein.

The terminology used herein is used to describe embodiments only, and is not intended to limit the present invention. The singular expression includes the plural expression unless the context clearly dictates otherwise.

As used herein, "combination thereof" means a mixture, laminate, composite, copolymer, alloy, blend, reaction product, and the like of the constituents.

Herein, it should be understood that terms such as "comprises," "includes," or "have" are intended to designate the presence of an embodied feature, number, step, element, or a combination thereof, but it does not preclude the possibility of the presence or addition of one or more other features, number, step, element, or a combination thereof.

In the drawings, the thickness of layers, films, panels, regions, etc., are exaggerated for clarity and like reference numerals designate like elements throughout the specification. It will be understood that when an element such as a layer, film, region, or substrate is referred to as being "on" another element, it can be directly on the other element or intervening elements may also be present. In contrast, when an element is referred to as being "directly on" another element, there are no intervening elements present.

In addition, "layer" herein includes not only a shape formed on the whole surface when viewed from a plan view, but also a shape formed on a partial surface.

In addition, the average particle diameter may be measured by a method well known to those skilled in the art, for example, may be measured by a particle size analyzer, or may be measured by an optical microscope photograph such as a transmission electron micrograph or a scanning electron micrograph. Alternatively, it is possible to obtain an average particle diameter value by measuring using a dynamic light scattering method, performing data analysis, counting the number of particles for each particle size range, and calculating from this. Unless otherwise defined, the average particle diameter may mean the diameter (D50) of particles having a cumulative volume of 50 volume% in the particle size distribution.

Herein, "or" is not to be construed as an exclusive meaning, for example, "A or B" is construed to include A, B, A+B, and the like.

As used herein, unless otherwise defined, "substituted" refers to replacement of at least one hydrogen in a substituent or compound by deuterium, a halogen group, a hydroxyl group, an amino group, a C1 to C30 amine group, a nitro group, a C1 to C40 silyl group, a C1 to C30 alkyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, a C1 to C20 alkoxy group, a C1 to C10 fluoroalkyl group, a cyano group, or a combination thereof.

Specifically, "substituted" refers to replacement of at least one hydrogen in a substituent or compound by deuterium, a halogen group, a C1 to C30 alkyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, a C1 to C10 fluoroalkyl group, or a cyano group. For example, "substituted" refers to replacement of at least one hydrogen in a substituent or compound by deuterium, a halogen group, a C1 to C20 alkyl group, a C6 to C30 aryl group, a C1 to C10 fluoroalkyl group, or a cyano group. Alternatively, "substituted" refers to replacement of at least one hydrogen in a substituent or compound by deuterium, a halogen group, a C1 to C5 alkyl group, a C6 to C18 aryl group, a C1 to C5 fluoroalkyl group, or a cyano group. For example, "substituted" refers to replacement of at least one hydrogen in a substituent or compound by deuterium, a cyano group, a halogen group, a methyl group, an ethyl group, a propyl group, a butyl group, a phenyl group, a biphenyl group, a terphenyl group, a trifluoromethyl group, or a naphthyl group.

Expressions such as C1 to C30 mean that the number of carbon atoms is 1 to 30.

### Rechargeable Lithium Battery

In an embodiment, a rechargeable lithium battery comprises a positive electrode comprising a positive electrode active material comprising lithium cobalt-based oxide, a negative electrode comprising a carbon-based negative electrode active material and a silicon-based negative electrode active material, a separator between the positive electrode and the negative electrode, and an electrolyte solution, wherein the silicon-based negative electrode active material is included in an amount of about 0.1 wt% to about 10 wt% based on the total amount of the carbon-based negative electrode active material and the silicon-based negative electrode active material, and the electrolyte solution comprises a non-aqueous organic solvent, a lithium salt, and an additive, wherein the additive comprises a first compound that will be described later.

In a rechargeable lithium battery, the positive electrode and the negative electrode may be referred to as electrode designs capable of implementing high capacity, high voltage, and rapid charging characteristics. By incorporating an electrolyte solution with excellent voltage resistance and oxidation resistance stability, which can maximize the performance of these electrodes, the initial resistance and high-temperature performance in a high-capacity battery system are improved and the deterioration of cycle-life due to rapid charging to improve the overall performance of the battery. The rechargeable lithium battery may also be referred to as a 4.5 V class high voltage battery design.

FIG. 1 is a schematic view illustrating a rechargeable lithium battery according to an embodiment. Referring to FIG. 1, the rechargeable lithium battery 100 comprises a battery cell comprising a positive electrode 114, a negative electrode 112 facing the positive electrode 114, a separator 113 between the positive electrode 114 and the negative electrode 112, and an electrolyte solution impregnating them, a battery case 120 containing the battery cell, and a sealing member 140 sealing the battery case 120.

### Positive Electrode

The positive electrode 114 may comprise a current collector and a positive electrode active material layer on the current collector. The positive electrode active material layer may comprise a positive electrode active material and may optionally comprise a binder and/or a conductive material.

### Positive Electrode Active Material

The positive electrode active material according to an embodiment comprises a lithium cobalt-based oxide. The lithium cobalt-based oxide refers to an oxide comprising lithium and cobalt, and optionally further comprising other elements in addition to lithium and cobalt. The positive electrode active material comprising lithium cobalt-based oxide may realize high capacity and high initial charge/discharge efficiency, may be suitable for high voltage and high-speed charging, and may exhibit excellent resistance characteristics, high-temperature performance, and cycle-life characteristics when used together with an electrolyte solution to be described later.

The lithium cobalt-based oxide may be specifically represented by Chemical Formula 3.

[Chemical Formula 3] Liₐ₁Coₓ₁M¹_{y1}O_{2-b1}X_{b1}

In Chemical Formula 3, 0.9≤a1≤1.8, 0.7≤x1≤1, 0≤y1≤0.3, 0.9≤x1 + y1≤1.1, 0≤b1≤0.1, M¹ is at least one element selected from Al, B, Ba, Ca, Ce, Cr, Cu, Fe, Mg, Mn, Mo, Ni, Se, Si, Sn, Sr, Ti, V, W, Y, Zn and Zr, and X is at least one element selected from F, P, and S.

In Chemical Formula 3, x1 may be 0.8≤x1≤1, 0.9≤x1≤1, or 0.95≤x1<1. For example, M¹ may be at least one element selected from Al, Ca, Ce, Cr, Cu, Fe, Mg, Mo, Se, Sr, Ti, V, W, Y, Zn, and Zr. M¹ may increase structural stability of the lithium cobalt-based oxide at high voltage, and play a role of suppressing structural change or collapse due to movement of lithium ions.

The positive electrode active material may be in the form of particles comprising lithium cobalt-based oxide, and may be, for example, in the form of secondary particles in which a plurality of primary particles made of lithium cobalt-based oxide are aggregated. The secondary particles may have an average particle diameter (D50) of about 1 µm to about 30 µm. Herein, also below, the average particle diameter (D50) is measured by a particle size analyzer and may mean a diameter of particles whose cumulative volume is 50 volume% in the particle size distribution.

For example, the positive electrode active material may have a bimodal form that large particles and small particles are mixed. The positive electrode active material comprises a first positive electrode active material comprising lithium cobalt-based oxide having an average particle diameter (D50) of about 9 µm to about 25 µm and a second positive electrode active material that is particles comprising lithium cobalt-based oxide and having an average particle diameter (D50) of about 1 µm to about 8 µm. In this case, the first positive electrode active material may be included in an amount of about 60 wt% to about 90 wt%, and the second positive electrode active material may be included in an amount of about 10 wt% to about 40 wt% based on the total amount of first positive electrode active material and the second positive electrode active material. A positive electrode comprising such a positive electrode active material is advantageous in realizing high capacity and high energy density.

### Binder

The binder serves to well attach the positive electrode active material particles to each other and to well attach the positive electrode active material to the current collector. Examples of the binder may be polyvinyl alcohol, carboxylmethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but are not limited thereto.

The content of the binder in the positive electrode active material layer may be approximately about 0.1 wt% to about 5 wt% based on the total weight of the positive electrode active material layer.

### Conductive Material

The conductive material is included to provide electrode conductivity and any electrically conductive material may be used as a conductive material unless it causes a chemical change. Examples of the conductive material may comprise a carbon-based material such as natural graphite, artificial graphite, carbon black, acetylene black, ketjen black, a carbon fiber, carbon nanofiber, carbon nanotube, and the like; a metal-based material of a metal powder or a metal fiber comprising copper, nickel, aluminum, silver, and the like; a conductive polymer such as a polyphenylene derivative; or a mixture thereof.

The content of the conductive material in the positive electrode active material layer may be about 1 wt% to about 5 wt% based on the total weight of the positive electrode active material layer.

An aluminum foil may be used as the positive electrode current collector, but is not limited thereto.

### Negative Electrode

The negative electrode 112 may comprise a current collector and a negative electrode active material layer on the current collector. The negative electrode active material layer may comprise a negative electrode active material, and may optionally comprise a binder and/or a conductive material.

### Negative Electrode Active Material

The negative electrode active material according to an embodiment comprises a carbon-based negative electrode active material and a silicon-based negative electrode active material. The silicon-based negative electrode active material may be included in an amount of about 0.1 wt% to about 10 wt%, for example about 1 wt% to about 7 wt%, about 2 wt% to about 5 wt%, or about 2.5 wt% to about 5 wt% based on the total amount of the carbon-based negative electrode active material and the silicon-based negative electrode active material

In this case, high capacity may be realized, it is advantageous for high voltage and high-speed charging, and excellent resistance characteristics, high-temperature performance and cycle-life characteristics may be exhibited when used with an electrolyte solution to be described later. For example, if the content of the silicon-based negative electrode active material exceeds 5 wt%, even if the electrolyte solution described later is applied, the initial resistance of the battery may increase or the resistance increase rate during high-temperature storage may increase excessively.

The carbon-based negative electrode active material is a material capable of reversibly intercalating/deintercalating lithium ions, and may be crystalline carbon, amorphous carbon, or a combination thereof. The crystalline carbon may be, for example, irregular-shaped, plate-like, flake-like, spherical, or fiber-shaped graphite, and the graphite may be natural graphite or artificial graphite. The amorphous carbon may be, for example, soft carbon, hard carbon, a mesophase pitch carbonized product, or calcined coke. The carbon-based negative electrode active material may be, for example, crystalline carbon.

The silicon-based negative electrode active material may comprise, for example, silicon, a silicon-carbon composite, SiOₓ (0<x<2), a Si-Q alloy, or a combination thereof. In the alloy, Q is at least one element selected from an alkali metal, an alkaline earth metal, a Group 13 element, a Group 14 element, a Group 15 element, a Group 16 element, a transition metal, and a rare earth element, except for Si. The Q may be at least one selected from, for example, Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, and Po.

In an embodiment, the silicon-based negative electrode active material may comprise silicon-carbon composite particles. An average particle diameter (D50) of the silicon-carbon composite particles may be, for example, about 0.5 µm to about 20 µm. Likewise, the average particle diameter (D50) is measured by a particle size analyzer and may mean a diameter of particles whose cumulative volume is about 50 volume% in the particle size distribution. The silicon may be included in an amount of about 10 wt% to about 60 wt% and the carbon may be included in an amount of about 40 wt% to about 90 wt% based on 100 wt% of the silicon-carbon composite particle.

The silicon-carbon composite particle may comprise, for example, a core containing silicon particles and a carbon coating layer on a surface of the core. An average particle diameter (D50) of the silicon particles in the core may be about 10 nm to about 1 µm, or about 10 nm to about 200 nm. The silicon particle may exist alone, in the form of a silicon alloy, or in an oxidized form. The oxidized form of silicon may be represented as SiOₓ (0<x<2). In addition, the carbon coating layer may have a thickness of about 5 nm to about 100 nm.

For example, the silicon-carbon composite particle may comprise a core comprising silicon particles and crystalline carbon, and a carbon coating layer disposed on a surface of the core and comprising amorphous carbon. For example, in the silicon-carbon composite particle, the amorphous carbon may not exist in the core but only in the carbon coating layer.

The crystalline carbon may be artificial graphite, natural graphite, or a combination thereof, and the amorphous carbon may be coal-based pitch, mesophase pitch, petroleum-based pitch, coal-based oil, petroleum-based heavy oil, or a polymer resin (phenol resin, furan resin, polyimide resin, etc.). In this case, a content of the crystalline carbon may be about 10 wt% to about 70 wt%, and a content of the amorphous carbon may be about 20 wt% to about 40 wt% based on 100 wt% of the silicon-carbon composite particle.

In the silicon-carbon composite particle, the core may comprise a void in the central portion. The radius of the void may be about 30% to about 50% by length of the radius of the silicon-carbon composite particle.

The aforementioned silicon-carbon composite particle effectively may suppress problems such as volume expansion, structural collapse, or particle crushing due to charging and discharging to prevent the disconnection of the conductive path, may realize high capacity and high efficiency, and may be used under high-voltage or high-speed charging condition.

The negative electrode active material may further comprise lithium metal, a lithium metal alloy, a tin-based negative electrode active material, a transition metal oxide, or a combination thereof, in addition to the aforementioned carbon-based negative electrode active material and silicon-based negative electrode active material.

The lithium metal alloy may be an alloy of at least one element selected from Na, K, Rb, Cs, Fr, Be, Mg, Ca, Sr, Si, Sb, Pb, In, Zn, Ba, Ra, Ge, Al and Sn, and lithium.

The tin-based negative electrode active material may be, for example, Sn, SnO₂, a Sn-R alloy, or a combination thereof. In the alloy, R is at least one element selected from an alkali metal, an alkaline earth metal, a Group 13 element, a Group 14 element, a Group 15 element, a Group 16 element, a transition metal, and a rare earth element, except for tin. The R may be at least one selected from, for example, Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, and Po.

### Binder

The binder serves to well adhere the negative electrode active material particles to each other and also to adhere the negative electrode active material to the current collector. The binder may be a water-insoluble binder, a water-soluble binder, or a combination thereof.

Examples of the water-insoluble binder comprise polyvinyl chloride, carboxylated polyvinyl chloride, polyvinyl fluoride, an ethylene oxide-containing polymer, an ethylene propylene copolymer, polystyrene, polyvinylpyrrolidone, polyurethane, polytetrafluoro ethylene, polyvinylidene fluoride, polyethylene, polypropylene, polyamideimide, polyimide, or a combination thereof.

The water-soluble binder may comprise a rubber binder or a polymer resin binder. The rubber binder may be selected from a styrene-butadiene rubber, an acrylated styrene-butadiene rubber, an acrylonitrile-butadiene rubber, an acrylic rubber, a butyl rubber, a fluororubber, and a combination thereof. The polymer resin binder may be selected from polyethylene oxide, polyvinylpyrrolidone, polyepichlorohydrin, polyphosphazene, polyacrylonitrile, an ethylene propylene diene copolymer, polyvinylpyridine, chlorosulfonated polyethylene, latex, a polyester resin, an acrylic resin, a phenol resin, an epoxy resin, polyvinyl alcohol, and a combination thereof.

When a water-soluble binder is used as the negative binder, a cellulose-based compound capable of imparting viscosity may be further included as a kind of thickener. As the cellulose-based compound, one or more of carboxymethyl cellulose, hydroxypropylmethyl cellulose, methyl cellulose, or alkali metal salts thereof may be mixed and used. The alkali metal may be Na, K, or Li. The amount of the thickener used may be about 0.1 parts by weight to about 3 parts by weight based on 100 parts by weight of the negative electrode active material.

A content of the binder may be about 0.1 wt% to about 5 wt% based on 100 wt% of the negative electrode active material layer.

### Conductive Material

The conductive material is included to provide electrode conductivity and any electrically conductive material may be used as a conductive material unless it causes a chemical change. Examples of the conductive material comprise a carbon-based material such as natural graphite, artificial graphite, carbon black, acetylene black, ketjen black, a carbon fiber, a carbon nanofiber, a carbon nanotube, and the like; a metal-based material of a metal powder or a metal fiber comprising copper, nickel, aluminum, silver, and the like; a conductive polymer such as a polyphenylene derivative; or a mixture thereof.

The negative electrode current collector may comprise one selected from a copper foil, a nickel foil, a stainless steel foil, a titanium foil, a nickel foam, a copper foam, a polymer substrate coated with a conductive metal, and a combination thereof.

### Electrolyte Solution

The electrolyte solution according to an embodiment comprises a non-aqueous organic solvent, a lithium salt, and an additive, and the additive comprises a first compound that is a compound represented by Chemical Formula 1, CsPF₆, or a combination thereof. The electrolyte solution has excellent voltage resistance and oxidation resistance stability, and when used with the aforementioned positive electrode and the negative electrode, a stable film may be formed on the interface between the electrode and the electrolyte solution even in a high voltage environment, and the phenomenon of elution of metal ions in the electrolyte solution may be effectively suppressed, resulting in lowering an initial resistance and improving the high-temperature characteristics of a rechargeable lithium battery having a high-capacity and high-voltage design.

### Additives

The compound represented by Chemical Formula 1 may be referred to as a cesium sulfonylimide salt or a cesium fluorinated sulfonylimide salt.

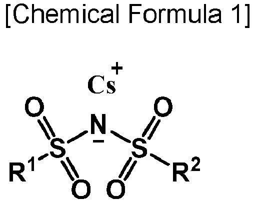

In Chemical Formula 1, R¹ and R² are each independently a fluoro group, or a C1 to C4 fluoroalkyl group substituted with at least one fluoro group.

The first compound that is the compound represented by Chemical Formula 1, CsPF₆, or the combination thereof may be decomposed in the electrolyte solution even under high voltage conditions to form a stable film on the surface of the electrode, and may effectively control the elution of lithium ions from the electrode to prevent electrode decomposition. Specifically, the first compound is reduced and decomposed before non-aqueous organic solvents such as carbonate-based solvents to form a solid-electrolyte-interface (SEI) film at the interface between the negative electrode and the electrolyte solution, thereby preventing decomposition of the electrolyte solution and electrode, and suppressing an increase in battery internal resistance due to gas generation. It is understood that the SEI film is partially decomposed through a reduction reaction during charging and discharging and moves to the surface of the positive electrode to form a film at the interface between the positive electrode and the electrolyte solution through an oxidation reaction, thereby preventing the decomposition of the positive electrode surface and the oxidation reaction of the electrolyte solution.

For example, in Chemical Formula 1, R¹ and R² may each independently be a fluoro group or a C1 to C4 fluoroalkyl group substituted with at least two fluoro groups. Alternatively, R¹ and R² may each independently be a fluoro group or a C1 to C4 fluoroalkyl group substituted with at least three fluoro groups. For example, R¹ and R² may each independently be a fluoro group or a C1 to C3 fluoroalkyl group substituted with at least three fluoro groups. Alternatively, R¹ and R² may each independently be a fluoro group or a C1 to C2 fluoroalkyl group substituted with at least three fluoro groups.

For example, the compound represented by Chemical Formula 1 may be represented by Chemical Formula 1-1 or Chemical Formula 1-2.

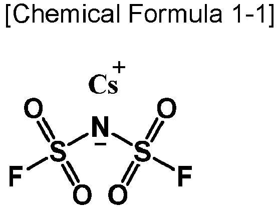

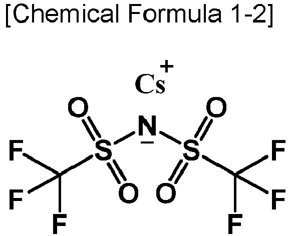

The first compound may be included in an amount of about 0.01 parts by weight to about 5.0 parts by weight, for example about 0.05 parts by weight to about 4.0 parts by weight, about 0.1 parts by weight to about 3.0 parts by weight, about 0.1 parts by weight to about 4.0 parts by weight, about 0.1 parts by weight to about 1.0 part by weight, or about 0.1 parts by weight to about 0.7 parts by weight based on 100 parts by weight of the total amount of the non-aqueous organic solvent and the lithium salt. When the first compound is included in the above range, it is possible to improve a voltage resistance and oxidation resistance stability of the electrolyte solution without adversely affecting the overall performance of the battery, effectively suppress a resistance increase problem of a battery designed for high capacity and high voltage, and improve high-temperature performance. For example, when the content of the compound represented by Chemical Formula 1 is excessive, a resistance increase rate in a battery during high-temperature storage may increase.

The additive may further comprise a second compound represented by Chemical Formula 2, in addition to the aforementioned first compound. The compound represented by Chemical Formula 2 may be referred to as a cesium fluorinated sulfonylimide salt, and has a different structural formula from Chemical Formula 1. The second compound represented by Chemical Formula 2 is decomposed in the electrolyte solution during battery operation to form a stable film on the surface of the electrode, and may effectively control the problem of elution of lithium ions from the electrode. When the additive further comprises the second compound represented by Chemical Formula 2, the voltage resistance and oxidation resistance stability of the electrolyte solution may be further improved in a high-capacity, high-voltage battery.

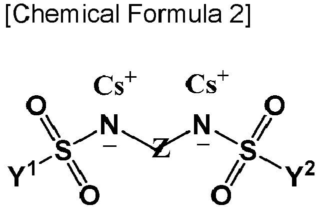

In Chemical Formula 2, Z is C(=O) or S(=O)₂, and Y' and Y² are each independently a fluoro group or a C1 to C5 fluoroalkyl group substituted with at least one fluoro group.

In the definition of Y' and Y², the C1 to C5 fluoroalkyl group substituted with at least one fluoro group may be, for example, a C1 to C5 fluoroalkyl group substituted with at least two fluoro groups, or a C1 to C5 fluoroalkyl group substituted with at least three fluoro groups, and the C1 to C5 fluoroalkyl group may be, for example, a C1 to C4 fluoroalkyl group, a C1 to C3 fluoroalkyl group, or a C1 to C2 fluoroalkyl group.

The second compound represented by Chemical Formula 2 may be, for example, represented by any one of Chemical Formulas 2-1 to 2-8.

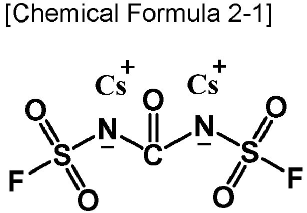

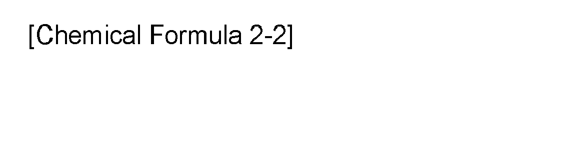

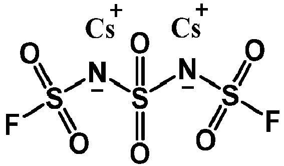

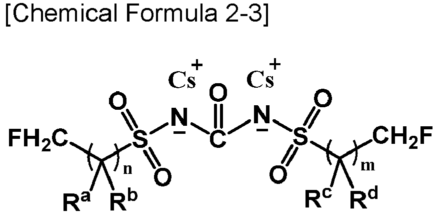

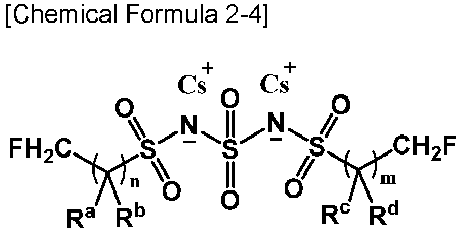

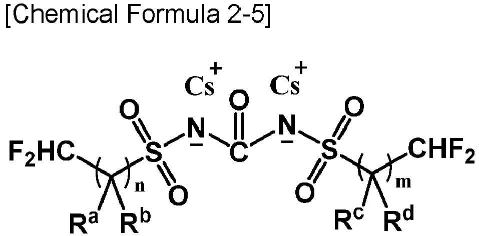

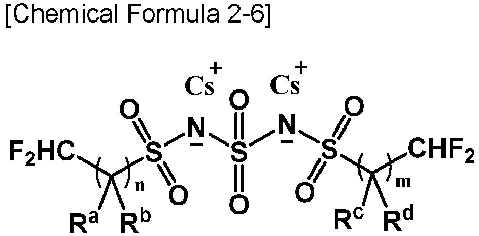

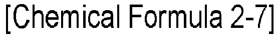

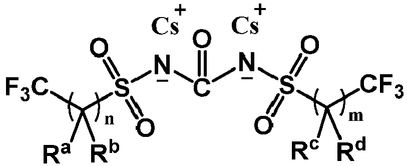

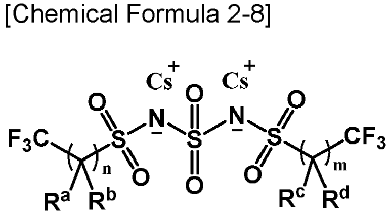

In Chemical Formulas 2-3 to 2-8, R^{a}, R^{b}, R^{c}, and R^{d} are each independently hydrogen or a fluoro group, and n and m are each independently an integer of 0 to 4. For example, n and m may each independently be 0, 1, or 2.

The second compound represented by Chemical Formula 2 may be included in an amount of about 0.01 parts by weight to about 5 parts by weight, for example about 0.05 parts by weight to about 4.0 parts by weight, about 0.1 parts by weight to about 3.0 parts by weight, about 0.1 parts by weight to about 4.0 parts by weight, about 0.1 parts by weight to about 1.0 part by weight, or about 0.1 parts by weight to about 0.7 parts by weight based on 100 parts by weight of the total amount of the non-aqueous organic solvent and the lithium salt. When the compound represented by Formula 2 is included in the above range, the voltage resistance and oxidation resistance stability of the electrolyte solution may be improved without adversely affecting the overall performance of the battery, and the high-temperature performance of a battery designed for high capacity and high voltage may be improved.

The electrolyte solution may further comprise other additives in addition to the aforementioned additives, and the other additives may comprise vinylene carbonate (VC), fluoroethylene carbonate (FEC), difluoroethylene carbonate (DFEC), chloroethylene carbonate (CEC), dichloroethylene carbonate (DCEC), bromoethylene carbonate (BEC), dibromoethylene carbonate (DBEC), nitroethylene carbonate, cyanoethylene carbonate, vinylethylene carbonate (VEC), succinonitrile (SN), adiponitrile (AN), 1,3,6-hexane tricyanide (HTCN), propene sultone (PST), propane sultone (PS), lithium tetrafluoroborate (LiBF₄), lithium difluorophosphate (LiPO₂F₂), 2-fluoro biphenyl (2-FBP), or a combination thereof.

When the electrolyte solution further comprises such other additives, high-temperature storage characteristics may be improved, and for example gases generated from the positive electrode and the negative electrode during high-temperature storage may be effectively controlled.

The other additives may be included in an amount of about 0.1 part by weight to about 20 parts by weight, for example, about 0.2 parts by weight to about 15 parts by weight, or about 0.5 parts by weight to about 10 parts by weight based on 100 parts by weight of the total amount of the non-aqueous organic solvent and the lithium salt. When other additives are included within the above ranges, a rechargeable lithium battery having improved high-temperature storage characteristics such as effectively controlling gas generated from an electrode without adversely affecting the overall performance of the battery may be implemented.

### Non-Aqueous Organic Solvent

The non-aqueous organic solvent serves as a medium through which ions involved in the electrochemical reaction of the battery may be transferred. As the non-aqueous organic solvent, a carbonate-based solvent, an ester-based solvent, an ether-based solvent, a ketone-based solvent, an alcohol-based solvent, an aprotic solvent, or a combination thereof may be used.

In an embodiment, the non-aqueous organic solvent may comprise a carbonate-based solvent and an ester-based solvent. For example, the non-aqueous organic solvent may comprise a carbonate-based solvent and a C1 to C8 alkyl propionate. In this case, the electrolyte solution may realize excellent voltage resistance and oxidation resistance stability, and is suitable for application to the aforementioned high-capacity, high-voltage electrode design.

The carbonate-based solvent may comprise, for example, dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), or a combination thereof.

The ester-based solvent may comprise, for example, methyl acetate, ethyl acetate, n-propyl acetate, dimethyl acetate, methyl propionate, ethyl propionate, propyl propionate, butyl propionate, γ-butyrolactone, decanolide, valerolactone, mevalonolactone, caprolactone, or a combination thereof.

The ether-based solvent may comprise, for example, dibutyl ether, tetraglyme, diglyme, dimethoxyethane, 2-methyltetrahydrofuran, tetrahydrofuran, or a combination thereof.

The ketone-based solvent may be, for example, cyclohexanone, and the alcohol-based solvent may comprise, for example, ethyl alcohol, isopropyl alcohol, or a combination thereof. The aprotic solvent may comprise, for example nitriles such as R-CN (wherein, R is a C2 to C20 linear, branched, or cyclic hydrocarbon group and may comprise a double bond, an aromatic ring, or an ether bond), and the like, amides such as dimethyl formamide, and the like, dioxolanes such as 1,3-dioxolane, and the like, or a combination thereof.

The non-aqueous organic solvent may be used alone or in a mixture. When the organic solvent is used in a mixture, the mixture ratio may be controlled in accordance with a desirable battery performance.

According to an embodiment, when the non-aqueous organic solvent comprises the carbonate-based solvent and the ester-based solvent, about 10 volume% to about 60 volume% of the carbonate-based solvent and about 40 volume% to about 90 volume% of the ester-based solvent based on 100 volume% of the carbonate-based solvent and the ester-based solvent may be included. In this case, it is possible to improve the voltage resistance and oxidation resistance stability of the electrolyte solution in a high-capacity high-voltage battery system.

In addition, the carbonate-based solvent may comprise a cyclic carbonate and a chain carbonate. When the cyclic carbonate and the chain carbonate are mixed in a volume ratio of about 1:1 to about 1:9, the overall performance of the electrolyte solution may be improved.

The non-aqueous organic solvent may further comprise an aromatic hydrocarbon-based organic solvent in addition to the carbonate-based solvent. In this case, the carbonate-based solvent and the aromatic hydrocarbon-based organic solvent may be mixed in a volume ratio of about 1:1 to about 30:1.

The aromatic hydrocarbon-based solvent may be, for example, a compound represented by Chemical Formula I.

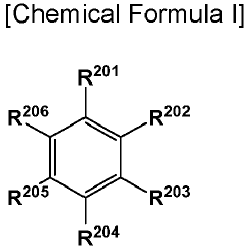

In Chemical Formula I, R²⁰¹ to R²⁰⁶ are the same or different and are at least one selected from hydrogen, a halogen group, a C1 to C10 alkyl group, and a C1 to C10 haloalkyl group.

The aromatic hydrocarbon-based solvent may comprise, for example, benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, or a combination thereof.

The electrolyte solution may further comprise vinylene carbonate or an ethylene carbonate-based compound of Chemical Formula II as a cycle-life improving additive.

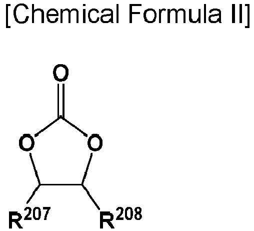

In Chemical Formula II, R²⁰⁷ and R²⁰⁸ are the same or different, and are selected from hydrogen, a halogen group, a cyano group, a nitro group, and fluorinated C1 to C5 alkyl group, provided that at least one of R²⁰⁷ and R²⁰⁸ is selected from a halogen group, a cyano group, a nitro group, and a fluorinated C1 to C5 alkyl group, but both of R²⁰⁷ and R²⁰⁸ are not simultaneously hydrogen.

Examples of the ethylene carbonate-based compound may be difluoro ethylenecarbonate, chloroethylene carbonate, dichloroethylene carbonate, bromoethylene carbonate, dibromoethylene carbonate, nitroethylene carbonate, cyanoethylene carbonate, or fluoroethylene carbonate. The amount of the additive for improving cycle-life may be used within an appropriate range.

### Lithium Salt

The lithium salt dissolved in the non-aqueous organic solvent supplies lithium ions in a battery, enables a basic operation of a rechargeable lithium battery, and improves transportation of the lithium ions between positive and negative electrodes.

Examples of the lithium salt comprise at least one selected from LiPF₆, LiBF₄, LiSbF₆, LiAsF₆, LiN(SO₂C₂F₅)₂, Li(CF₃SO₂)₂N, LiN(SO₃C₂F₅)₂, Li(FSO₂)₂N (lithium bis(fluorosulfonyl)imide, LiFSI), LiC₄F₉SO₃, LiClO₄, LiAlO₂, LiAlCl₄, LiPO₂F₂, LiN(CₓF₂ₓ₊₁SO₂)(C_{y}F_{2y+1}SO₂), wherein x and y are natural numbers, for example, an integer ranging from 1 to 20, lithium difluoro(bisoxalato) phosphate, LiCl, Lil, LiB(C₂O₄)₂ (lithium bis(oxalato) borate, LiBOB), and lithium difluoro(oxalato)borate (LiDFOB).

The lithium salt may be used in a concentration ranging from about 0.1 M to about 2.0 M. When the lithium salt is included at the above concentration range, an electrolyte solution may have excellent performance and lithium ion mobility due to optimal conductivity and viscosity of the electrolyte solution.

### Separator

The separator 113 separates a positive electrode 114 and a negative electrode 112 and provides a transporting passage for lithium ions and may be any generally-used separator in a lithium ion battery. The separator may have low resistance to ion transport and excellent impregnation for an electrolyte solution. For example, the separator may comprise a glass fiber, polyester, polyethylene, polypropylene, polytetrafluoroethylene, or a combination thereof and may have a form of a non-woven fabric or a woven fabric. For example, in a lithium ion battery, a polyolefin-based polymer separator such as polyethylene and polypropylene is mainly used. In order to ensure the heat resistance or mechanical strength, a coated separator comprising a ceramic component or a polymer material may be used. Optionally, it may have a mono-layered or multi-layered structure.

Rechargeable lithium batteries may be classified as lithium ion batteries, lithium ion polymer batteries, and lithium polymer batteries according to the presence of a separator and the type of electrolyte solution used therein. The rechargeable lithium batteries may have a variety of shapes and sizes, and include cylindrical, prismatic, coin, or pouch-type batteries, and may be thin film batteries or may be rather bulky in size. Structures and manufacturing methods for these batteries pertaining to this disclosure are well known in the art.

The rechargeable lithium battery according to an embodiment may be used in an electric vehicle (EV), a hybrid electric vehicle such as a plug-in hybrid electric vehicle (PHEV), and portable electronic device because it implements a high capacity and has excellent storage stability, cycle-life characteristics, and high rate characteristics at high temperatures.

Hereinafter, examples of the present invention and comparative examples are described. However, the examples are for the purpose of illustration and are not to be construed as limiting the present invention.

### Example 1

### (1) Manufacture of Positive Electrode

A first positive electrode active material (LiCo_{0.974}Al_{0.0210}Mg_{0.005}O₂) having an average particle diameter (D50) of about 20 µm and a second positive electrode active material (LiCo_{0.9823}Al_{0.0127}Mg_{0.005}O₂) having an average particle diameter (D50) of about 4 µm are mixed in a weight ratio of 8:2 to prepare a positive electrode active material.

95 wt% of the prepared positive electrode active material, 3 wt% of a polyvinylidene fluoride binder, and 2 wt% of a ketjen black conductive material are mixed in an N-methylpyrrolidone solvent to prepare a positive electrode active material slurry. The positive electrode active material slurry is coated on an aluminum current collector, dried, and then compressed to prepare a positive electrode.

### (2) Manufacture of Negative Electrode

95 wt% of graphite is mixed with 5 wt% of a silicon-carbon composite particle to prepare a negative electrode active material. The silicon-carbon composite particle comprises a core comprising artificial graphite and a silicon particle and a carbon coating layer of coal pitch formed on the surface of the core.

The prepared negative electrode active material, a styrene-butadiene rubber binder, and carboxymethylcellulose are mixed in a weight ratio of 98:1:1, respectively, and dispersed in distilled water to prepare a negative electrode active material slurry. The negative electrode active material slurry is coated on a copper current collector, dried, and then compressed to manufacture a negative electrode.

### (3) Preparation of Electrolyte Solution

Ethylene carbonate (EC), propylene carbonate (PC), ethyl propionate (EP), and propyl propionate (PP) are mixed in a volume ratio of 10:15:30:45 to prepare a non-aqueous organic solvent. LiPF₆ lithium salt is dissolved at a concentration of 1.3 M to prepare a basic electrolyte solution. 0.25 parts by weight of the compound represented by Chemical Formula 1-1 is added to 100 parts by weight of the basic electrolyte solution to prepare an electrolyte solution.

### (4) Manufacture of Rechargeable Lithium Battery Cell

A polyethylene polypropylene multilayer separator is disposed between the prepared positive electrode and negative electrode, the resultant is inserted into a pouch cell, and then the prepared electrolyte solution is injected to manufacture a 4.5 V pouch-type full cell.

### Examples 2 to 8 and Comparative Examples 1 to 7

Each rechargeable lithium battery cell is manufactured in the same manner as in Example 1 except that a content of the silicon-carbon composite particle in the negative electrode and a content of the compound represented by Chemical Formula 1-1 in the electrolyte solution are changed as shown in Table 1 below.

### Evaluation Example 1: Evaluation of High-temperature Storage Characteristics

The rechargeable lithium battery cells of Examples 1 to 8 and Comparative Examples 1 to 7 are charged from 3.0 V to an upper limit of 4.5 V under a constant current condition of 1.5 C, paused for 10 minutes, and discharged to 3.0 V under a condition of 1.0 C at 25 °C to perform initial charge and discharge. Subsequently, △V/△I (voltage change/current change) of each battery cell, which is initial DC resistance (DC-IR), is measured, and the results are shown in Table 1 below. Then, the battery cells are brought to a full-charge state (SOC 100%), stored at 60 °C for 30 days and then, measured again with respect to DC-IR, and the results are shown in Table 1 below. In addition, a ratio of DC-IR after stored at 60 °C for 30 days to the initial DC-IR is calculated, and the result is shown as a resistance increase rate in Table 1 below.

**(Table 1)**

| | Negative electrode | | Electrolyte solution | Initial DC-IR | DC-IR after storage at 60 °C for 30 days | Resistance increase rate |
|---|---|---|---|---|---|---|
| | Graphi te | Silicon-carbon composite particle | Chemical Formula 1-1 | | | |
| | wt% | wt% | parts by weight | moh m | mohm | % |
| Comparative Example 1 | 100 | 0 | 0 | 24.3 | 41.2 | 169.5 |
| Comparative Example 2 | 100 | 0 | 0.25 | 24 | 39.2 | 163.3 |
| Comparative Example 3 | 100 | 0 | 0.5 | 23.5 | 36.3 | 154.5 |
| Comparative Example 4 | 100 | 0 | 1.0 | 23.8 | 37.8 | 158.8 |
| Comparative Example 5 | 95 | 5 | 0 | 22.5 | 36.9 | 164 |
| Comparative Example 6 | 97.5 | 2.5 | 0 | 23.8 | 38.1 | 160.1 |
| Comparative Example 7 | 92.5 | 7.5 | 0.5 | 21.4 | 40.1 | 187.4 |
| Example 1 | 95 | 5 | 0.25 | 22.2 | 33.1 | 149.1 |
| Example 2 | 95 | 5 | 0.5 | 21.8 | 29.4 | 134.9 |
| Example 3 | 95 | 5 | 1.0 | 22.1 | 32.5 | 147.1 |
| Example 4 | 95 | 5 | 1.25 | 22.9 | 36.8 | 160.7 |
| Example 5 | 97.5 | 2.5 | 0.25 | 23.5 | 33.1 | 140.9 |
| Example 6 | 97.5 | 2.5 | 0.5 | 22.8 | 31.2 | 136.8 |
| Example 7 | 97.5 | 2.5 | 1.0 | 23.2 | 35.2 | 151.7 |
| Example 8 | 97.5 | 2.5 | 1.25 | 23.9 | 37.2 | 155.6 |

Referring to Table 1, Comparative Examples 1 to 4, in which the carbon-based negative electrode active material alone is applied to the negative electrodes without applying a silicon-based negative electrode active material, exhibit high initial resistance and a high resistance increase rate at the high-temperature storage even though the compound represented by Chemical Formula 1 is applied to the electrolyte solution.

In Comparative Example 5 and Exampled 1 to 4, 5 wt% of the silicon-based negative electrode active material is applied to the negative electrode. Compared with Comparative Example 5 exhibiting a resistance increase rate of 164% at the high-temperature storage, Examples 1 to 4 exhibit a reduced resistance increase rate. Particularly, Examples 1 to 3, in which the compound represented by Chemical Formula 1 is applied in an amount of 0.25 parts by weight to 1.0 part by weight, exhibit a significantly reduced resistance increase rate.

In Comparative Example 6 and Examples 5 to 8, the silicon-based negative electrode active material is used in an amount of 2.5 wt% to a negative electrode. Compared with Comparative Example 6 exhibiting a resistance increase rate of 160.1% at the high-temperature storage, Examples 5 to 8 exhibit a much reduced resistance increase rate. Particularly, Examples 5 and 6, in which a content of the compound represented by Chemical Formula 1 is 0.25 parts by weight to 0.5 parts by weight, exhibit a significantly reduced resistance increase rate.

Comparative Example 7, in which 7.5 wt% of the silicon-based negative electrode active material is used to the negative electrode, exhibits a very high resistance increase rate due to the high-temperature storage, even though the compound represented by Chemical Formula 1-1 is applied in an amount of 0.5 parts by weight to the electrolyte solution. Accordingly, while a silicon-based negative electrode active material is applied in an amount of 0.1 wt% to 5 wt% to a negative electrode, when the compound represented by Chemical Formula 1 is simultaneously applied in a predetermined amount to an electrolyte solution, effects of reducing initial resistance in a high-capacity high-voltage battery system and reducing a resistance increase rate at the high-temperature storage are maximized. These effects lead to suppressing degradation of a cycle-life even in situation of rapid charging, a high voltage, or the like in the high-capacity battery system.

While this invention has been described in connection with what is presently considered to be practical example embodiments, it is to be understood that the invention is not limited to the disclosed embodiments. On the contrary, it is intended to cover various modifications and equivalent arrangements included within the spirit and scope of the appended claims.

### <Description of Symbols>

| | | | |
|---|---|---|---|
| 100: | rechargeable lithium battery | 112: | negative electrode |
| 113: | separator | 114: | positive electrode |
| 120: | battery case | 140: | sealing member |

## Claims

1. A rechargeable lithium battery, comprising
a positive electrode comprising a positive electrode active material comprising lithium cobalt-based oxide,
a negative electrode comprising a carbon-based negative electrode active material and a silicon-based negative electrode active material,
a separator between the positive electrode and the negative electrode,
and
an electrolyte solution,
wherein the silicon-based negative electrode active material is included in an amount of 0.1 wt% to 10 wt% based on the total amount of the carbon-based negative electrode active material and the silicon-based negative electrode active material, and
the electrolyte solution comprises a non-aqueous organic solvent, a lithium salt, and an additive, and the additive comprises a first compound that is a compound represented by Chemical Formula 1, CsPF₆, or a combination thereof: 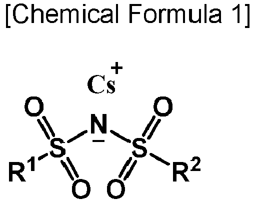 In Chemical Formula 1, R¹ and R² are independently fluoro group, or a C1 to C4 fluoroalkyl group substituted with at least one fluoro group.

2. The rechargeable lithium battery of claim 1, wherein
the compound represented by Chemical Formula 1 is represented by Chemical Formula 1-1 or Chemical Formula 1-2:

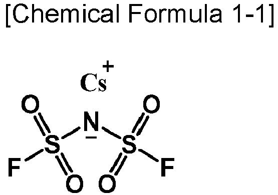

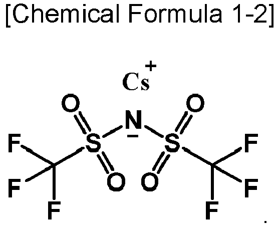

3. The rechargeable lithium battery of claim 1 or claim 2, wherein the compound represented by Chemical Formula 1 is included in an amount of 0.01 parts by weight to 5.0 parts by weight based on 100 parts by weight of the total amount of the non-aqueous organic solvent and the lithium salt.

4. The rechargeable lithium battery of any one of claims 1 to 3,
wherein
the compound represented by Chemical Formula 1 is included in an amount of 0.1 parts by weight to 1.0 part by weight based on 100 parts by weight of the total amount of the non-aqueous organic solvent and the lithium salt; or
the compound represented by Chemical Formula 1is included in an amount of 0.1 parts by weight to 0,7 parts by weight based on 100 parts by weight of the total amount of the non-aqueous organic solvent and the lithium salt.

5. The rechargeable lithium battery of any one of claims 1 to 4,
wherein
the additive of the electrolyte solution further comprises a second compound represented by Chemical Formula 2: 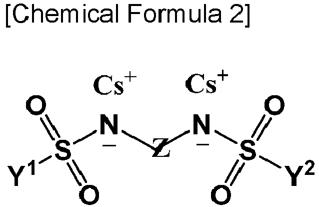 wherein, in Chemical Formula 2,
Z is C(=O) or S(=O)₂, and
Y' and Y² are each independently a fluoro group or a C1 to C5 fluoroalkyl group substituted with at least one fluoro group.

6. The rechargeable lithium battery of claim 5, wherein
the second compound represented by Chemical Formula 2 is represented by any one of Chemical Formulas 2-1 to 2-8: 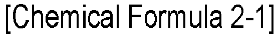 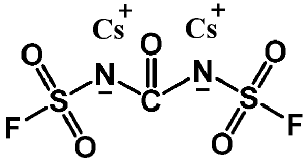 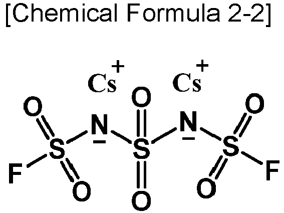 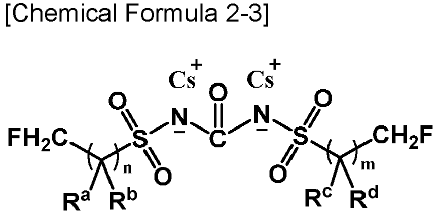 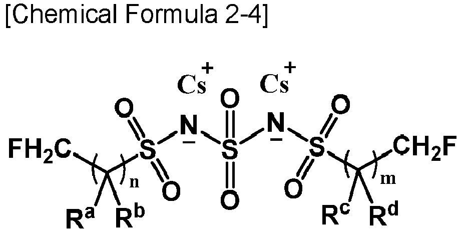 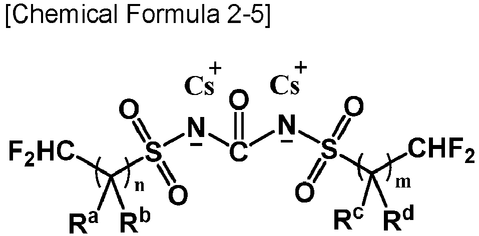 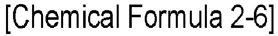 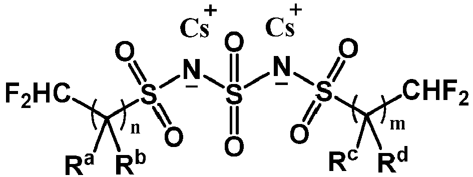 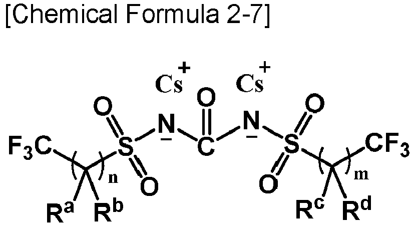 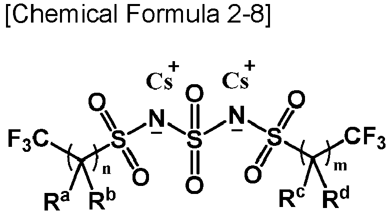 wherein, in Chemical Formulas 2-3 to 2-8, R^{a}, R^{b}, R^{c}, and R^{d} are each independently hydrogen or a fluoro group, and n and m are each independently an integer of 0 to 4.

7. The rechargeable lithium battery of claim 5 or claim 6, wherein the second compound represented by Chemical Formula 2 is included in an amount of 0.01 parts by weight to 5 parts by weight based on 100 parts by weight of the total amount of the non-aqueous organic solvent and the lithium salt.

8. The rechargeable lithium battery of any one of claims 1 to 7,
wherein
the electrolyte solution further comprises other additives, and the other additives comprise vinylene carbonate (VC), fluoroethylene carbonate (FEC), difluoroethylene carbonate (DFEC), chloroethylene carbonate (CEC), dichloroethylene carbonate (DCEC), bromoethylene carbonate (BEC), dibromoethylene carbonate (DBEC), nitroethylene carbonate, cyanoethylene carbonate, vinylethylene carbonate (VEC), succinonitrile (SN), adiponitrile (AN), 1,3,6-hexane tricyanide (HTCN), propene sultone (PST), propane sultone (PS), lithium tetrafluoroborate (LiBF₄), lithium difluorophosphate (LiPO₂F₂), 2-fluoro biphenyl (2-FBP), or a combination thereof; and/or
in the electrolyte solution, the non-aqueous organic solvent comprises a carbonate-based solvent and an ester-based solvent.

9. The rechargeable lithium battery of any one of claims 1 to 8,
wherein
in the positive electrode active material, the lithium cobalt-based oxide is represented by Chemical Formula 3:
[Chemical Formula 3]
Liₐ₁Coₓ₁M¹_{y1}O_{2-b1}X_{b1}
wherein, in Chemical Formula 3,
In Chemical Formula 3, 0.9≤a1≤1.8, 0.7≤x1≤1, 0≤y1≤0.3, 0.9≤x1 + y1≤1.1, 0≤b1≤0.1, M¹ is at least one element selected from Al, B, Ba, Ca, Ce, Cr, Cu, Fe, Mg, Mn, Mo, Ni, Se, Si, Sn, Sr, Ti, V, W, Y, Zn and Zr, and X is at least one element selected from F, P, and S..

10. The rechargeable lithium battery of any one of claims 1 to 9,
wherein
the positive electrode active material comprises
a first positive electrode active material comprising lithium cobalt-based oxide having an average particle diameter (D50) of 9 µm to 25 µm, and
a second positive electrode active material that is particles comprising lithium cobalt-based oxide and having an average particle diameter (D50) of 1 µm to 8 µm.

11. The rechargeable lithium battery of claim 10, wherein
the first positive electrode active material is included in an amount of 60 wt% to 90 wt%, and the second positive electrode active material is included in an amount of 10 wt% to 40 wt% based on the total amount of first positive electrode active material and the second positive electrode active material.

12. The rechargeable lithium battery of any one of claims 1 to 11,
wherein
the silicon-based negative electrode active material is included in an amount of 2 wt% to 5 wt% based on the total amount of the carbon-based negative electrode active material and the silicon-based negative electrode active material.

13. The rechargeable lithium battery of any one of claims 1 to 12,
wherein
the silicon-based negative electrode active material comprises silicon-carbon composite particles; or.
the silicon-based negative electrode active material comprises silicon-carbon composite particles and the average particle diameter (D50) of the silicon-carbon composite particles is 0.5 µm to 20 µm.

14. The rechargeable lithium battery of claim 13, wherein
the silicon-carbon composite particles comprise a core comprising silicon particles, and a carbon coating layer on a surface of the core.

15. The rechargeable lithium battery of claim 14, wherein
the silicon-carbon composite particles comprise a core comprising silicon particles and crystalline carbon, and a carbon coating layer disposed on a surface of the core and comprising amorphous carbon; and/or
the average particle diameter (D50) of the silicon particles of the core is 10 nm to 200 nm; and/or
the core comprises a void at the center, and a radius of the void is 30 length% to 50 length% of the radius of the silicon-carbon composite particle.
